# EUROPEAN PATENT SPECIFICATION

(11) **EP 2 712 134 B1**
(45) Date of publication and mention of the grant of the patent: **17.06.2015**
(21) Application number: 12869551.7
(22) Date of filing: 02.08.2012
(51) Int. Cl.: H04L 12/70

(54) **CELL CONCATENATION PROCESSING METHOD AND DEVICE**
VERARBEITUNGSVERFAHREN UND -VORRICHTUNG FÜR ZELLVERKNÜPFUNGEN
PROCÉDÉ DE TRAITEMENT DE CONCATÉNATION DE CELLULE ET DISPOSITIF CORRESPONDANT

(30) Priority: 24.02.2012 CN 201210044035
(43) Date of publication of application: 26.03.2014
(73) Proprietor: Huawei Technologies Co., Ltd., Longgang District Shenzhen, Guangdong 518129 (CN)
(72) Inventor: XIAO, Shengjin, Shenzhen Guangdong 518129 (CN); LI, Wei, Shenzhen Guangdong 518129 (CN); ZENG, Tianhui, Shenzhen Guangdong 518129 (CN)
(74) Representative: Haley, Stephen
(86) International application number: PCT/CN2012/079548
(87) International publication number: WO 2013/123761

(56) References cited:
- WO-A1-2005/104467
- CN-A- 101 414 978
- CN-A- 101 764 750
- CN-A- 102 611 621
- US-A1- 2006 002 423
- US-A1- 2007 206 602
- US-B1- 6 970 478

## Description

### TECHNICAL FIELD

The present invention relates to communications technologies, and in particular, to a handling method and device for cell concatenation.

### BACKGROUND

US patent No.6970478 discloses a packet transfer method and apparatus and a packet communication system, which can increase the size of switching unit or transfer time unit of a crossbar switch section constructing a packet transfer apparatus, ensure the calculation time necessary for switch connection setting even when the number of input/output interfaces or input/output interface speed increases, and increase the number of packets transferable on a network.

In an Asynchronous Transfer Mode (Asynchronous Transfer Mode, ATM for short) network, an ATM cell is transferred transparently by connecting conventional ATM network resources using Pseudo-Wire Emulation Edge to Edge (Pseudo-Wire Emulation Edge to Edge, PWE3 for short), and then emulating a conventional ATM service on a Multi-Protocol Label Switching (Multi-Protocol Label Switching, MPLS for short) network, so that an end user perceives no difference. However, if each cell is encapsulated into a PWE3 packet, a problem of low bandwidth utilization rate for ATM is caused.

In order to solve the above technical problem, the prior art improves the bandwidth utilization rate for ATM on an MPLS network by cell concatenation. Specifically, an input cell is queued, before a concatenation timeout period expires, to make a PWE3 packet until the concatenation timeout period expires or a predefined concatenation number is reached, and then is sent to the MPLS network.

However, when more cells are to be concatenated, because each cell to be concatenated must wait until all cells to be concatenated are received, or until the concatenation timeout period expires, the existing handling method for cell concatenation may cause problems of delay and jitter.

### SUMMARY

The present invention provides a handling method and device for cell concatenation to solve the problems of additional delay and jitter caused by the handling method for cell concatenation in the prior art.

In a first aspect, the present invention provides a handling method for cell concatenation, including:
receiving a cell of a packet;
determining whether an end-of-packet cell of the packet is received before a concatenation timeout period expires and before the number of received cells of the packet reaches a concatenation number;
if the end-of-packet cell of the packet is received before the concatenation timeout period expires and before the number of received cells of the packet reaches the concatenation number, encapsulating the received cell of the packet into a first Pseudo Wire Edge-to-Edge PWE3 packet, and sending the first PWE3 packet to a Multi-Protocol Label Switching MPLS network.

In another aspect, the present invention provides a handling device for cell concatenation, including a receiving module, a concatenation handling module, an encapsulating module, and a sending module, where:
the receiving module is configured to receive a cell of a packet;
before a concatenation timeout period expires and before the number of received cells of the packet reaches a concatenation number, the concatenation handling module is configured to determine whether an end-of-packet cell of the packet is received;
if the concatenation handling module determines that the end-of-packet cell of the packet is received before the concatenation timeout period expires and before the number of received cells of the packet reaches the concatenation number, the encapsulating module is configured to encapsulate the received cell of the packet into a first Pseudo-Wire Emulation Edge-to-Edge PWE3 packet; and
the sending module is configured to send the first PWE3 packet to a Multi-Protocol Label Switching MPLS network.

The benefit of the present invention lies in that before a concatenation timeout period expires and before the number of received cells of a packet reaches a concatenation number, if an end-of-packet cell of the packet is received, the received cell of the packet is encapsulated into a first PWE3 packet. This relieves a limit of the concatenation number or the concatenation timeout

The benefit of the present invention lies in that before a concatenation timeout period expires or before the number of cells of a packet reaches a concatenation number, if an end-of-packet cell of the packet is received, the received cell of the packet is encapsulated into a first PWE3 packet. This relieves a limit of the concatenation number or the concatenation timeout period in a forwarding process for cell concatenation of the packet, so as to reduce a delay and a jitter for the packet caused by cell concatenation.

### BRIEF DESCRIPTION OF DRAWINGS

FIG. 1 is a flowchart of a handling method for cell concatenation according to an embodiment of the present invention;
FIG. 2 is a flowchart of a handling method for cell concatenation according to another embodiment of the present invention;
FIG. 3a is a flowchart of a handling method for cell concatenation according to still another embodiment of the present invention;
FIG. 3b is a flowchart of a handling method for cell concatenation according to still another embodiment of the present invention;
FIG. 4 is a schematic structural diagram of a handling device for cell concatenation according to an embodiment of the present invention; and
FIG. 5 is a schematic structural diagram of a handling device for cell concatenation according to another embodiment of the present invention.

### DESCRIPTION OF EMBODIMENTS

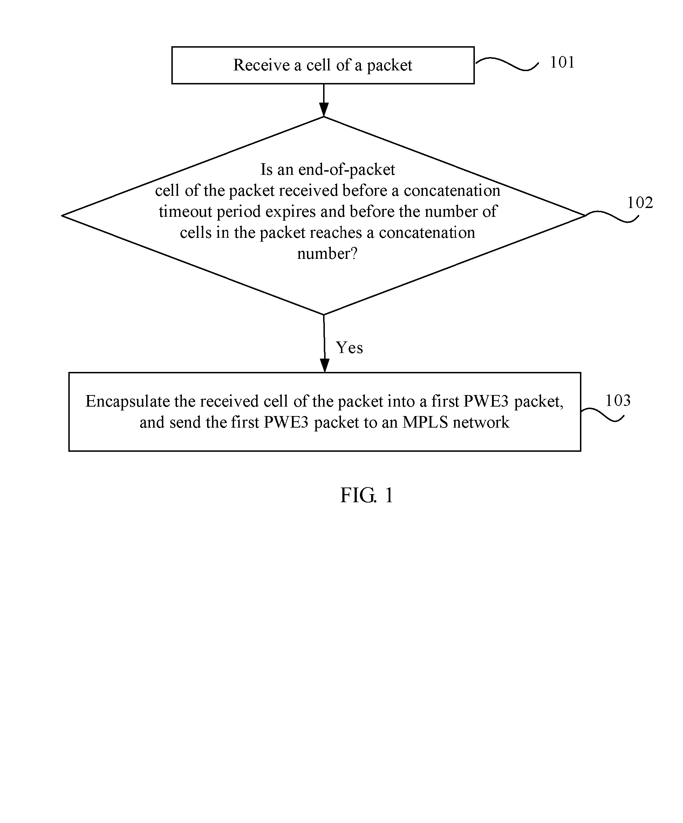

FIG. 1 is a flowchart of a handling method for cell concatenation according to an embodiment of the present invention. As shown in FIG. 1, the method according to this embodiment includes:
101. Receive a cell of a packet.
102. Determine whether an end-of-packet cell of the packet is received before a concatenation timeout period expires and before the number of received cells of the packet reaches a concatenation number.
103. If the end-of-packet cell of the packet is received, encapsulate the received cell of the packet into a first PWE3 packet, and send the first PWE3 packet to an MPLS network.

In this embodiment, if the end-of-packet cell of the packet is received before the concatenation timeout period expires or before the number of cells of the packet reaches the concatenation number, the received cell of the packet is encapsulated into the first PWE3 packet. This relieves a limit of the concatenation number or the concatenation timeout period in a cell concatenation process of the packet, so as to reduce a delay and a jitter caused by the cell concatenation.

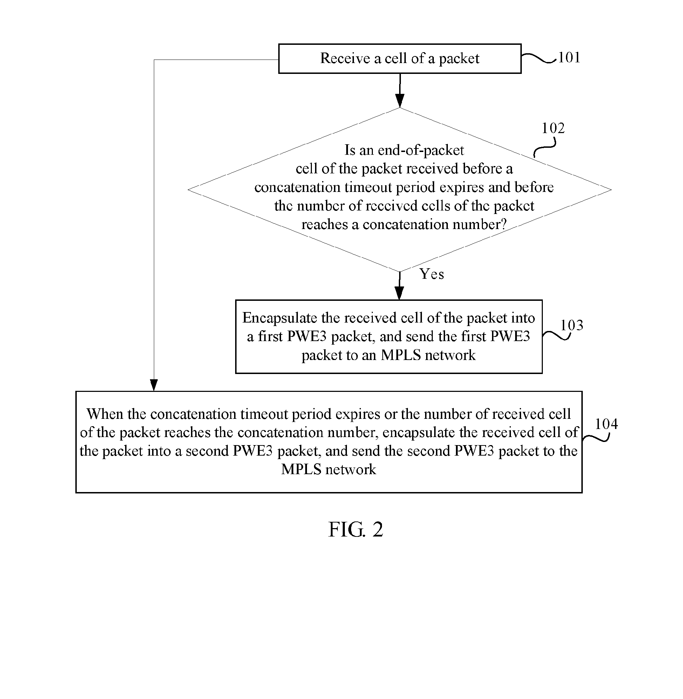

Alternatively, on the basis of the embodiment illustrated in FIG. 1, FIG. 2 is a flowchart of a handling method for cell concatenation according to another embodiment of the present invention. As shown in FIG. 2, after 101, the method may further include:
104. When the concatenation timeout period expires or the number of received cells of the packet reaches the concatenation number, encapsulate the received cell of the packet into a second PWE3 packet, and send the second PWE3 packet to the MPLS network.

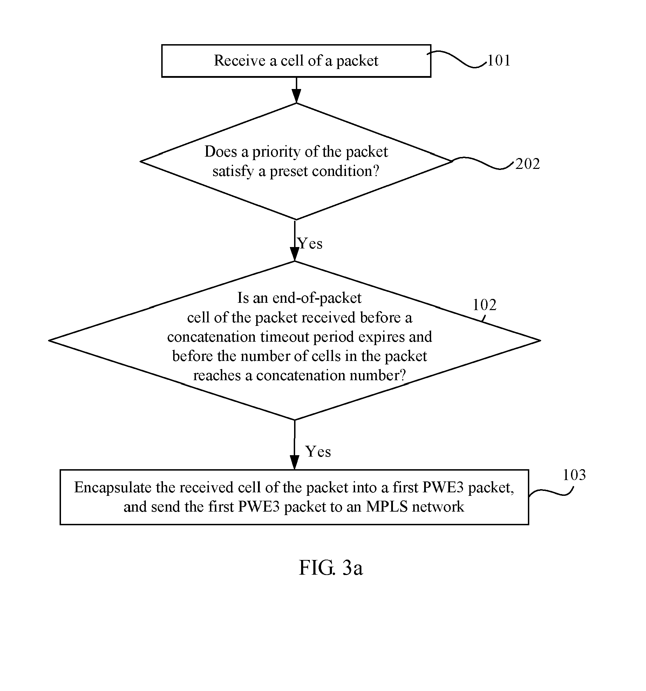

Alternatively, on the basis of the embodiment illustrated in FIG. 1 or FIG. 2, FIG. 3a is a flowchart of a handling method for cell concatenation according to still another embodiment of the present invention. As shown in FIG. 3a, after 101, the method according to the embodiment includes:
202. Determine a priority of the packet; and if the priority of the packet satisfies a preset condition, perform 102.

Alternatively, the satisfying, by the priority of the packet, the preset condition may indicate that: the packet is a real-timeness sensitive packet, or the packet is a packet on which no delay processing is performed.

For example, a User Datagram Protocol (User Datagram Protocol, UDP for short) port carried in a head cell of the packet may be based on to determine whether the packet is a voice packet; if the packet is a voice packet, the packet is real-timeness sensitive, and therefore the priority of the packet satisfies the preset condition.

For another example, it may be determined whether a cell loss priority (Cell Loss Priority, CLP for short) value of a head cell of the packet is equal to a preset CLP value (for example, the preset CLP value is 0); and if yes, it indicates that no delay processing is performed on the packet before, and therefore the priority of the packet satisfies the preset condition.

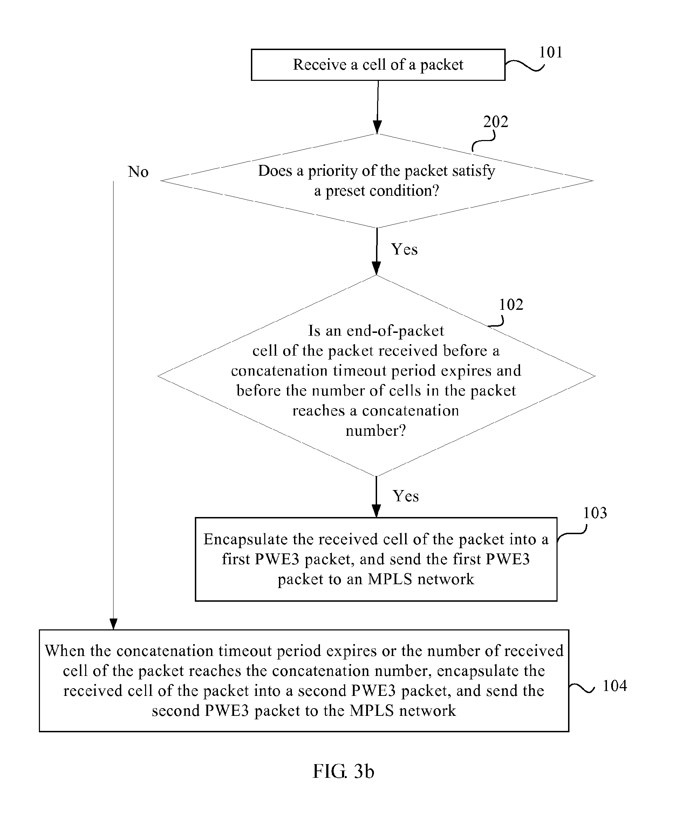

Alternatively, FIG. 3b is a flowchart of a handling method for cell concatenation according to still another embodiment of the present invention. As shown in FIG. 3b, if the priority of the packet does not satisfy the preset condition, 104 is performed.

In this embodiment, concatenation is performed differently on packets having different priorities respectively, where a packet having a priority satisfying the preset condition is relieved from the limit of the concatenation number and the concatenation timeout period, which reduces a delay and a jitter caused by the cell concatenation, and improves network transmission quality and network bandwidth utilization.

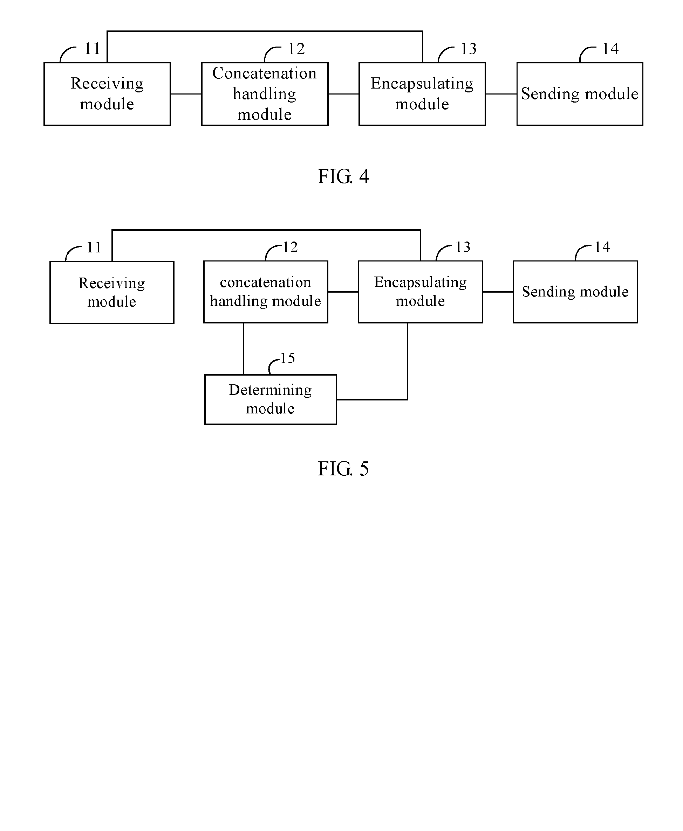

FIG. 4 is a schematic structural diagram of a handling device for cell concatenation according to an embodiment of the present invention. As shown in FIG. 4, the handling device for cell concatenation according to this embodiment includes a receiving module 11, a concatenation handling module 12, an encapsulating module 13, and a sending module 14, where:
the receiving module 11 is configured to receive a cell of a packet;
before a concatenation timeout period expires and before the number of received cells of the packet reaches a concatenation number, the concatenation handling module 12 is configured to determine whether an end-of-packet cell of the packet is received;
if the concatenation handling module 12 determines that the end-of-packet cell of the packet is received, the encapsulating module 13 is configured to encapsulate the received cell of the packet into a first PWE3 packet; and
the sending module 14 is configured to send the first PWE3 packet to an MPLS network.

The handling device for cell concatenation according to the embodiment may implement the technical solution according to the method embodiment illustrated in FIG. 1, where the implementation principle thereof is similar and is not described repeatedly herein.

In this embodiment, if the end-of-packet cell is received before the concatenation timeout period expires and before the number of cells of the packet reaches the concatenation number, the received cell of the packet is encapsulated into the first PWE3 packet. This relieves a limit of the concatenation number or the concatenation timeout period in a cell concatenation process of the packet, so as to reduce a delay and a jitter caused by the cell concatenation.

Further, in another embodiment of the present invention, on the basis of the embodiment illustrated in FIG. 4, when the concatenation timeout period expires or the number of received cells of the packet reaches the concatenation number, the encapsulating module 13 is further configured to encapsulate the received cell of the packet into a second PWE3 packet; and the sending module 14 is further configured to send the second PWE3 packet to the MPLS network.

FIG. 5 is a schematic structural diagram of a handling device for cell concatenation according to another embodiment of the present invention. As shown in FIG. 5, on the basis of the embodiment illustrated in FIG. 4, the device further includes a determining module 15, configured to determine a priority of the packet. If the determining module 15 determines that the priority of the packet satisfies a preset condition, before the concatenation timeout period expires or before the number of received cells of the packet reaches the concatenation number, the concatenation handling module 12 is triggered.

If the determining module 15 determines that the priority of the packet does not satisfy the preset condition, when the concatenation timeout period expires or the number of received cells of the packet reaches the concatenation number, the encapsulating module 13 is triggered.

The device described in this embodiment of the present invention may implement the method described in the embodiment of the present invention, where the implementation principle thereof is similar and is not described repeatedly herein.

In this embodiment, when the end-of-packet cell of the packet is received before the concatenation timeout period expires and before the number of cells of the packet reaches the concatenation number, each received cell of the packet is encapsulated into the first PWE3 packet, and then the first PWE3 packet is sent to the MPLS network, so that the packet is relieved from the limit of the concatenation number or the concatenation timeout period in the forwarding process for the cell concatenation of the packet, so as to reduce a delay and a jitter for the packet caused by the cell concatenation.

A person of ordinary skill in the art may understand that all or a part of the steps of the foregoing method embodiments may be implemented by a program instructing relevant hardware. The foregoing program may be stored in a computer readable storage medium. When the program runs, the steps of the foregoing method embodiments are performed. The foregoing storage mediums include various mediums capable of storing program code, such as an ROM, an RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that he may still make modifications to the technical solutions described in the foregoing embodiments, or make equivalent replacements to some or all the technical features thereof, without departing from the spirit and scope of the technical solutions of the embodiments of the present invention.

## Claims

1. A handling method for cell concatenation, comprising:
receiving (101) a cell of a packet;
determining (102) whether an end-of-packet cell of the packet is received before a concatenation timeout period expires and before the number of received cells of the packet reaches a concatenation number; and
**characterized by**:
if the end-of-packet cell of the packet is received before the concatenation timeout period expires and before the number of received cells of the packet reaches the concatenation number, encapsulating (103) the received cell of the packet into a first Pseudo Wire Edge-to-Edge PWE3, packet, and sending the first PWE3 packet to a Multi-Protocol Label Switching, MPLS, network.

2. The handling method for cell concatenation according to claim 1, further comprising:
when the concatenation timeout period expires or the number of received cells of the packet reaches the concatenation number, encapsulating (104) the received cell of the packet into a second PWE3 packet, and sending the second PWE3 packet to the MPLS network.

3. The handling method for cell concatenation according to claim 1 or 2, after the receiving (101) the packet, further comprising:
determining (202) a priority of the packet; and
the determining (103) whether the end-of-packet cell is received before the concatenation timeout period expires and before the number of received cells of the packet reaches the concatenation number, comprises:
if the priority of the packet satisfies a preset condition, determining whether the end-of-packet cell of the packet is received before the concatenation timeout period expires and before the number of received cells of the packet reaches the concatenation number.

4. The handling method for cell concatenation according to claim 3, wherein the encapsulating (103), when the concatenation timeout period expires or the number of received cells of the packet reaches the concatenation number, the received cell of the packet into the second PWE3 packet, and sending the second PWE3 packet to the MPLS network comprises:
if the priority of the packet does not satisfy the preset condition, when the concatenation timeout period expires or the number of received cells of the packet reaches the concatenation number, encapsulating (104) the received cell of the packet into the second PWE3 packet, and sending the second PWE3 packet to the MPLS network.

5. The handling method for cell concatenation according to claim 3, wherein the priority of the packet satisfying the preset condition comprises that:
the packet is a real-timeness sensitive packet, or the packet is a packet on which no delay processing is performed.

6. A handling device for cell concatenation, comprising a receiving module (11), a concatenation handling module (12), an encapsulating module (13), and a sending module (14), wherein:
the receiving module (11) is configured to receive a cell of a packet;
before a concatenation timeout period expires and before the number of received cells of the packet reaches a concatenation number, the concatenation handling module (12) is configured to determine whether an end-of-packet cell of the packet is received;
**characterized by**:
if the concatenation handling module (12) determines that the end-of-packet cell of the packet is received before the concatenation timeout period expires and before the number of received cells of the packet reaches the concatenation number, the encapsulating module (13) is configured to encapsulate the received cell of the packet into a first Pseudo-Wire Emulation Edge-to-Edge PWE3, packet; and
the sending module (14) is configured to send the first PWE3 packet to a Multi-Protocol Label Switching, MPLS, network.

7. The handling device for cell concatenation according to claim 6, wherein when the concatenation timeout period expires or the number of received cells of the packet reaches the concatenation number, the encapsulating module (13) is further configured to encapsulate the received cell of the packet into a second PWE3 packet, and the sending module (14) is further configured to send the second PWE3 packet to the MPLS network.

8. The handling device for cell concatenation according to claim 6 or 7, further comprising:
a determining module (15), configured to determine a priority of the packet; and
if the determining module (15) determines that the priority of the packet satisfies a preset condition, before the concatenation timeout period expires and before the number of received cells of the packet reaches the concatenation number, the concatenation handling module (12) is triggered.

9. The handling device for cell concatenation according to claim 8, wherein if the determining module (15) determines that the priority of the packet does not satisfy the preset condition, when the concatenation timeout period expires or the number of received cells of the packet reaches the concatenation number, the encapsulating module (13) is triggered.

## Patentansprüche

1. Handhabungsverfahren zur Zellenverkettung, das Folgendes umfasst:
Empfangen (101) einer Zelle eines Pakets;
Bestimmen (102), ob eine Paketendzelle des Pakets empfangen wird, bevor eine Verkettungs-Timeout-Periode abläuft und bevor die Anzahl empfangener Zellen des Pakets eine Verkettungsanzahl erreicht; und
**gekennzeichnet durch**:
falls die Paketendzelle des Pakets empfangen ist, bevor die Verkettungs-Timeout-Periode abläuft und bevor die Anzahl der empfangenen Zellen des Pakets die Verkettungsanzahl erreicht, Verkapseln (103) der empfangenen Zelle des Pakets in ein erstes Pseudoleitungs-Kante-zu-Kante-Paket (Pseudo Wire Edge-to-Edge packet, PWE3-Paket) und Senden des ersten PWE3-Pakets zu einem Mehrfachprotokoll-Etikettvermittlungsnetz (Multi-Protocol Label Switching network, MPLS-Netz).

2. Handhabungsverfahren zur Zellenverkettung nach Anspruch 1, das ferner Folgendes umfasst:
wenn die Verkettungs-Timeout-Periode abläuft oder die Anzahl von empfangenen Zellen des Pakets die Verkettungsanzahl erreicht, Verkapseln (104) der empfangenen Zelle des Pakets in ein zweites PWE3-Paket und Senden des zweiten PWE3-Pakets zu dem MPLS-Netz.

3. Handhabungsverfahren zur Zellenverkettung nach Anspruch 1 oder 2 nach dem Empfangen (101) des Pakets, das ferner Folgendes umfasst:
Bestimmen (202) einer Priorität des Pakets; und
wobei das Bestimmen (103), ob das die Paketendzelle empfangen ist, bevor die Verkettungs-Timeout-Periode abläuft und bevor die Anzahl empfangener Zellen des Pakets die Verkettungsanzahl erreicht, Folgendes umfasst:
falls die Priorität des Pakets eine voreingestellte Bedingung erfüllt, Bestimmen, ob die Paketendzelle des Pakets empfangen ist, bevor die Verkettungs-Timeout-Periode abläuft und bevor die Anzahl der empfangenen Zellen des Pakets die Verkettungsanzahl erreicht.

4. Handhabungsverfahren zur Zellenverkettung nach Anspruch 3, wobei das Verkapseln (103), wenn die Verkettungs-Timeout-Periode abläuft oder die Anzahl empfangener Zellen des Pakets die Verkettungsanzahl erreicht, der empfangenen Zellen des Pakets in das zweite PWE3-Paket und Senden des zweiten PWE3-Pakets zu dem MPLS-Netz Folgendes umfasst:
falls die Priorität des Pakets die voreingestellte Bedingung nicht erfüllt, wenn die Verkettungs-Timeout-Periode abläuft oder die Anzahl von empfangenen Zellen des Pakets die Verkettungsanzahl erreicht, Verkapseln (104) der empfangenen Zelle des Pakets in das zweite PWE3-Paket und Senden des zweiten PWE3-Pakets zu dem MPLS-Netz.

5. Handhabungsverfahren zur Zellenverkettung nach Anspruch 3, wobei die Priorität des Pakets, das die voreingestellte Bedingung erfüllt, umfasst, dass:
das Paket ein echtzeit-sensitives Paket ist, oder das Paket ein Paket ist, auf dem keine Verzögerungsverarbeitung ausgeführt wird.

6. Handhabungsvorrichtung zur Zellenverkettung, die ein Empfangsmodul (11), ein Verkettungshandhabungsmodul (12), ein Verkapselungsmodul (13) und ein Sendemodul (14) umfasst, wobei:
das Empfangsmodul (11) konfiguriert ist, eine Zelle eines Pakets zu empfangen;
bevor eine Verkettungs-Timeout-Periode abläuft und bevor die Anzahl der empfangenen Zellen des Pakets eine Verkettungsanzahl erreicht, das Verkettungshandhabungsmodul (12) konfiguriert ist zu bestimmen, ob eine Paketendzelle des Pakets empfangen ist;
**gekennzeichnet durch**:
falls das Verkettungshandhabungsmodul (12) bestimmt, dass die Paketendzelle des Pakets empfangen ist, bevor die Verkettungs-Timeout-Periode abläuft und bevor die Anzahl von empfangenen Zellen des Pakets die Verkettungsanzahl erreicht, das Verkapselungsmodul (13) konfiguriert ist, die empfangene Zelle des Pakets in ein erstes Pseudoleitungsemulations-Kante-zu-Kante-Paket, PWE3-Paket, zu verkapseln; und
das Sendemodul (14) konfiguriert ist, das erste PWE3-Paket zu einem Mehrfachprotokoll-Etikettvermittlungsnetz, MPLS-Netz, zu senden.

7. Handhabungsvorrichtung zur Zellenverkettung nach Anspruch 6, wobei dann, wenn die Verkettungs-Timeout-Periode abläuft oder die Anzahl von empfangenen Zellen des Pakets die Verkettungsanzahl erreicht, das Verkapselungsmodul (13) ferner konfiguriert ist, die empfangene Zelle des Pakets in ein zweites PWE3-Paket zu verkapseln, und das Sendemodul (14) ferner konfiguriert ist, das zweite PWE3-Paket zu dem MPLS-Netz zu senden.

8. Handhabungsvorrichtung zur Zellenverkettung nach Anspruch 6 oder 7, die ferner Folgendes umfasst:
ein Bestimmungsmodul (15), das konfiguriert ist, eine Priorität des Pakets zu bestimmen; und
falls das Bestimmungsmodul (15) bestimmt, dass die Priorität des Pakets eine voreingestellte Bedingung erfüllt, bevor die Verkettungs-Timeout-Periode abläuft und bevor die Anzahl von empfangenen Zellen des Pakets die Verkettungsanzahl erreicht, das Verkettungshandhabungsmodul (12) gestartet wird.

9. Handhabungsvorrichtung zur Zellenverkettung nach Anspruch 8, wobei, falls das Bestimmungsmodul (15) bestimmt, dass die Priorität des Pakets die voreingestellte Bedingung nicht erfüllt, wenn die Verkettungs-Timeout-Periode abläuft oder die Anzahl von empfangenen Zellen des Pakets die Verkettungsanzahl erreicht, das Verkapselungsmodul (13) gestartet wird.

## Revendications

1. Procédé de traitement pour la concaténation de cellules, comprenant les étapes suivantes :
recevoir (101) une cellule d'un paquet ;
déterminer (102) si une cellule de fin de paquet du paquet est reçue avant l'expiration d'une période de délai d'attente de concaténation et avant que le nombre de cellules reçues du paquet n'atteigne un nombre de concaténations ; et
**caractérisé en ce que** :
si la cellule de fin de paquet du paquet est reçue avant l'expiration de la période de délai d'attente de concaténation et avant que le nombre de cellules reçues du paquet n'atteigne le nombre de concaténations, encapsuler (103) la cellule reçue du paquet dans un premier paquet bord à bord pseudo-filaire, PWE3, et envoyer le premier paquet PWE3 à un réseau de commutation multiprotocole par étiquette, MPLS.

2. Procédé de traitement pour la concaténation de cellules selon la revendication 1, comprenant en outre :
lorsque la période de délai d'attente de concaténation expire ou lorsque le nombre de cellules reçues du paquet atteint le nombre de concaténations, encapsuler (104) la cellule reçue du paquet dans un second paquet PWE3, et envoyer le second paquet PWE3 au réseau MPLS.

3. Procédé de traitement pour la concaténation de cellules selon la revendication 1 ou la revendication 2, comprenant en outre, après la réception (101) du paquet, l'étape suivante :
déterminer (202) une priorité du paquet ; et
déterminer (103) si la cellule de fin de paquet est reçue avant l'expiration de la période de délai d'attente de concaténation et avant que le nombre de cellules reçues du paquet n'atteigne le nombre de concaténations, comprend l'étape suivante :
si la priorité du paquet satisfait à une condition prédéterminée, déterminer si la cellule de fin de paquet du paquet est reçue avant l'expiration de la période de délai d'attente de concaténation et avant que le nombre de cellules reçues du paquet n'atteigne le nombre de concaténations.

4. Procédé de traitement pour la concaténation de cellules selon la revendication 3, dans lequel encapsuler (103), lorsque la période de délai d'attente de concaténation arrive à expiration ou lorsque le nombre de cellules reçues du paquet atteint le nombre de concaténations, de la cellule reçue du paquet dans le second paquet PWE3, et envoyer le second paquet PWE3 au réseau MPLS comprend l'étape suivante :
si la priorité du paquet ne satisfait pas la condition prédéterminée, lorsque la période de délai d'attente de concaténation arrive à expiration ou lorsque le nombre de cellules reçues du paquet atteint le nombre de concaténations, encapsuler (104) la cellule reçue du paquet dans le second paquet PWE3, et envoyer le second paquet PWE3 au réseau MPLS.

5. Procédé de traitement pour la concaténation de cellules selon la revendication 3, dans lequel la priorité du paquet satisfaisant à la condition prédéfinie comprend que :
le paquet est un paquet sensible au temps réel, ou le paquet est un paquet sur lequel aucun traitement de délai d'attente n'est effectué.

6. Dispositif de manipulation pour la concaténation de cellules, comprenant un module de réception (11), un module de traitement de concaténation (12), un module d'encapsulation (13), et un module d'envoi (14), où :
le module de réception (11) est configuré pour recevoir une cellule d'un paquet ;
avant l'expiration d'une période de délai d'attente de concaténation et avant que le nombre de cellules reçues du paquet n'atteigne un nombre de concaténations, le module de traitement de concaténation (12) est configuré pour déterminer si une cellule de fin de paquet du paquet est reçue ;
**caractérisé en ce que** :
si le module de traitement de concaténation (12) détermine que la cellule de fin de paquet du paquet est reçue avant l'expiration de la période de délai d'attente de concaténation et avant que le nombre de cellules reçues du paquet n'atteigne le nombre de concaténations, le module d'encapsulation (13) est configuré pour encapsuler la cellule reçue du paquet dans un premier paquet bord à bord pseudo-filaire, PWE3 ; et
le module d'envoi (14) est configuré pour envoyer le premier paquet PWE3 à un réseau de commutation multiprotocole par étiquette, MPLS.

7. Dispositif de traitement pour la concaténation de cellules selon la revendication 6, dans lequel, lorsque la période de délai d'attente de concaténation arrive à expiration ou lorsque le nombre de cellules reçues du paquet atteint le nombre de concaténations, le module d'encapsulation (13) est en outre configuré pour encapsuler la cellule reçue du paquet dans un second paquet PWE3, et le module d'envoi (14) est en outre configuré pour envoyer le second paquet PWE3 au réseau MPLS.

8. Dispositif de traitement pour la concaténation de cellules selon la revendication 6 ou la revendication 7, comprenant en outre :
un module de détermination (15), configuré pour déterminer une priorité du paquet ; et
si le module de détermination (15) détermine que la priorité du paquet satisfait à une condition prédéterminée, avant l'expiration de la période de délai d'attente de concaténation et avant que le nombre de cellules reçues du paquet n'atteigne le nombre de concaténations, le module de traitement de concaténation (12) est déclenché.

9. Dispositif de traitement pour la concaténation de cellules selon la revendication 8, dans lequel si le module de détermination (15) détermine que la priorité du paquet ne satisfait pas à la condition prédéfinie, lorsque la période de délai d'attente de concaténation arrive à expiration ou lorsque le nombre de cellules reçues du paquet atteint le nombre de concaténations, le module d'encapsulation (13) est déclenché.
